# EUROPEAN PATENT APPLICATION

(11) **EP 2 224 393 A1**
(43) Date of publication of application: **01.09.2010**
(21) Application number: 09154014.6
(22) Date of filing: 27.02.2009
(51) Int. Cl.: G06Q 30/00

(54) **Communications system for sending advertisement messages to a mobile wireless communications device**

(71) Applicant: RESEARCH IN MOTION LIMITED, Waterloo, Ontario N2L 3W8 (CA)
(72) Inventor: Wormald Chris, Waterloo, Ontario N2V 1K8 (CA); Church, Mark, Waterloo, Ontario N2L 3W8 (CA); Mallick, Martyn, Waterloo, Ontario N2V 1K8 (CA); Brown, Michael S., Waterloo, Ontario N2L 5Z5 (CA)
(74) Representative: Phillips, Emily Elizabeth

(57) **Abstract**

A communications system includes at least one mobile wireless communications device operable based upon payment of a wireless network, user subscription fee, and for sequentially playing media files. The communications system also includes an advertising server for sending at least one advertisement message to the at least one mobile wireless communications device to be played between the media files. The at least one mobile wireless device plays the audio advertisement messages between the media files for a discount of the wireless network user subscription fee.

## Description

### Technical Field

The present disclosure relates to the field of advertising and, more particularly, to the delivery of advertising to mobile wireless communications devices and related methods.

### Background

The pervasiveness of electronic communication and, in particular, mobile wireless communication, has led to a desire for the delivery of advertising to mobile wireless communications devices. In some applications, mobile advertising on such mobile wireless communications devices may be similar to more traditional advertising venues, such as television, radio, and print. For example, a mobile wireless communications device that has the capability of displaying video to a user may display a prerecorded advertisement to the user. Indeed, a television commercial may even be displayed to the user. Similarly, a mobile wireless communications device may play a prerecorded advertisement (such as an audio or video ad) to a user prior to the user making a telephone call.

Some users may not, however, be interested in listening to such advertisements without receiving a reward or perk in exchange for doing so. Therefore, attempts at compensating users for listening to advertisements may be desirable.

### Brief Description of the Drawings

FIG. 1 is a schematic block diagram of a communications system in accordance with the present embodiment.

FIG. 2 is a more detailed schematic block diagram of the advertising server of the communications system, as shown in FIG. 1.

FIG. 3 is a schematic block diagram of another embodiment a communications system.

FIG. 4 is a flow chart illustrating a method of operating the communications system of FIG. 1.

FIG. 5 is a flow chart illustrating another method of operating the communications system of Fig. 1.

Fig. 6 is a schematic block diagram illustrating exemplary components of a mobile wireless communications device that may be used with the communications system disclosed or shown in FIG. 1.

### Detailed Description

The present description is made with reference to the accompanying drawings, in which various embodiments are shown, However, many different embodiments may be used, and thus the description should not be construed as limited to the embodiments set forth herein. Rather, these are provided so that this disclosure will be thorough and complete. Like refer to like elements throughout, and prime notation is used to indicate similar elements in alternative embodiments.

Generally speaking, a communications system comprises at least one mobile wireless communications device that may be operable based upon payment of a wireless network user subscription fee, and that may be for sequentially playing media files. The communications system may also include an advertising server for sending at least one advertisement message to the at least one mobile wireless communications device to be played between media files. The at least one mobile wireless device may play the art least one advertisement message between media files for a discount of the wireless network user subscription fee.

The advertising server may selectively send the at least one advertisement message to the at least one mobile wireless communications device. In addition, the advertising server may further cooperate with the at least one mobile wireless communications device to generate a played advertisement message history. The advertising server may selectively send the at least one advertisement message based upon the played advertisement message history. This may be done to help ensure that a user hears the same advertisement a desired number of times.

The advertising server may further cooperate with the at least one mobile wireless communications device to generate a played media file history. The advertising server may selectively send the at least one advertisement message based upon the played media file history. This feature may allow the targeting of advertisements based upon a user's musical preferences. For example, a user who frequently listens to rock music may be more perceptive to advertisements for certain types of goods and services than a user who frequently listens to classical music,

The at least one mobile wireless communications device may permit user selection of playback of the at least one advertisement message and that user selection may thereby affect the discount of the wireless network user subscription fee, For example, the at least one mobile wireless communications device may permit the user to skip playback of the at least one advertisement message. However, such shipping of the at least one advertisement message may result in a lesser discount of the wireless network user subscription fee.

The advertising server may selectively send the at least one advertisement message to the at least one wireless communications devices based upon at least one selected played back advertisement message. For example, if a user listens to advertisements for pizza restaurants but skips advertisements for household appliances, the advertising server may selectively send more advertisements for pizza restaurants and less advertisements for household appliances to the at least one mobile wireless communications device.

The at least one mobile wireless communications device may comprise a processor and a memory cooperating therewith to store the media files. The media files may be transferred to the at least one mobile wireless communications device via the wireless network or by a wired connection to a computer, for example.

The processor and memory may further cooperate to store the at least one advertisement message. This may allow transferring of the at least one advertisement message to the at least one wireless device prior to playback. Alternatively or additionally, the advertising server may send the at least one advertisement message to the at least one mobile wireless communications device during playback of the audio files.

The at least one mobile wireless communications device may comprise a display. The at least one advertising message may comprise at least one of an audio advertisement message and a visual advertisement message. The at least one advertising message may comprise both an audio advertisement message and a visual advertisement message. In this case, the visual advertisement messages may be displayed on the display at the same time as advertisement messages are being played, or the different types of advertising messages may be presented at different times.

The advertising server may send the at least one advertisement message as a stream. The at least one mobile wireless communications device may further comprises a transceiver cooperating with the processor and the memory to play the at least one advertisement message stream.

Another aspect is directed to an advertising server to cooperate with at least one mobile wireless communications device operable based upon payment of a wireless network user subscription fee and for sequentially playing media files. The advertising server comprises an advertising module for selectively sending at least one advertisement message to the at least one mobile wireless communications device to be played between media files for a discount of the wireless network user subscription fee.

Yet another aspect is directed to a method of operating a communications system. The method comprises operating at least one mobile wireless communications device based upon payment of a wireless network user subscription fee, the at least one mobile wireless communications device for sequentially playing media files. The method includes sending, with an advertising server, at least one advertisement message to the at least one mobile wireless communications device to be played between media files. The method also includes playing, with the at least one mobile wireless device, the at least one advertisement message between media files for a discount of the wireless network user subscription fee.

A further aspect is directed to a computer readable medium to store computer executable modules for use by an advertising server to cooperate with at least one mobile wireless communications device operable based upon payment of a wireless network user subscription fee and for sequentially playing media files. The computer executable modules comprise a computer executable advertising module for selectively sending at least one advertisement message to the art least one mobile wireless communications device to be played between media files for a discount of the wireless network user subscription fee. The computer executable modules further comprise a computer executable database module to cooperate with the advertising module to store a played advertisement history. The computer executable advertising module selectively sends the at least one advertisement message based upon the played advertisement message history.

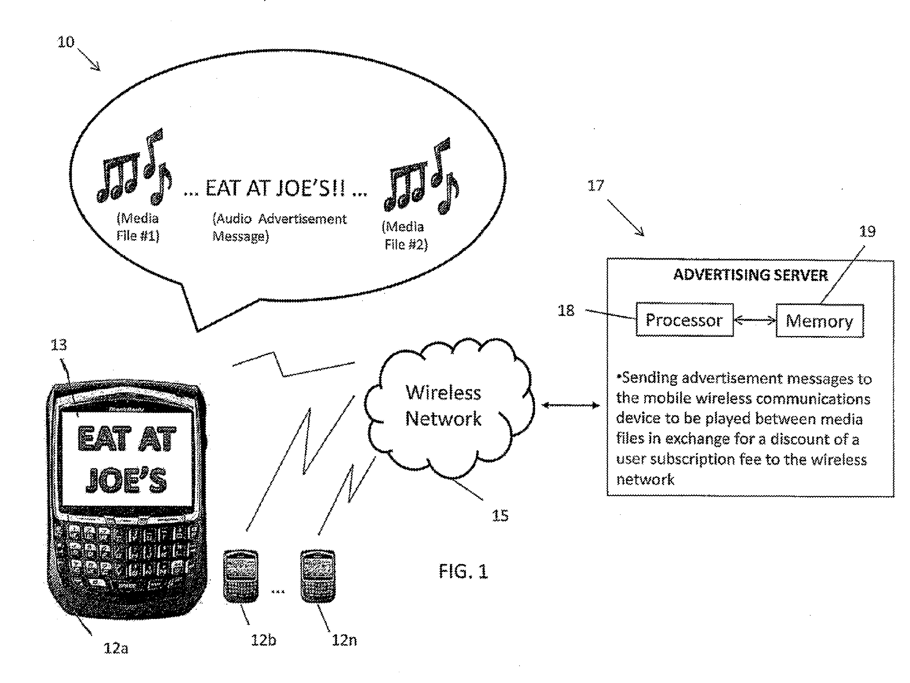

With reference to FIGS. 1-2, a communications system 10 is now described. The communications system **10** includes a plurality of mobile wireless communications devices **12a-12a** for sequentially playing media files. The media files may comprise MPNG Layer-3 (MP3) files, waveform (WAV) files, windows media player files, or audio video interleave (AVI) files, for example. The mobile wireless communications devices **12a-12n** may play any suitable media file, as will be appreciated by those skilled in the art.

The plurality of mobile wireless communications devices **12a-12n** may communicate with the wireless network **15** based, upon a wireless network user subscription fee. For example, the wireless network **15** may be a cellular network and the plurality of mobile wireless communications devices **12a-12n** may be operable to communicate therewith through the purchase of a cellular network access plan.

The mobile wireless communications device **12a,** or devices **12a-12n,** may comprise a cellular telephone, personal digital assistant (PDA), portable computer, a vehicle capable of wireless communication, or another suitable device. The mobile wireless communications devices **12a-12n** may each be a different type of device (e.g, one may be a cellular telephone, one may be a laptop computer, and one may be a PDA); or some of the devices **12a-12n** may comprise the same type of device. For clarity of explanation, only the single Mobile wireless communications device **12a** will be referred to hereinafter.

As discussed above, the wireless network **15** may comprise a cellular network and may employ at least one cellular protocol, such as Global System for Mobile Communications (GSM) or Code Division Multiple Access (CDMA). Those skilled in the art will understand that cellular protocols such as GSM and CDMA may enable the sending and receiving of SMS and MMS messages and may provide connectivity with the Internet. The wireless network **15** may additionally or alternatively comprise a wireless data network employing a wireless protocol, such as Wi-Fi or WiMAX.

An advertising server **17** comprises a processor **18** and a memory **19** coupled thereto. The advertising server **17** may communicate wirelessly with the wireless network **15** or, alternatively, may communicate with a wired node of the wireless network,

The advertising server **17** sends at least one advertisement message to the mobile wireless communications device **12a** to be played between media files in exchange for a discount of the user subscription fee to the wireless network **15.** This discount may entice users to agree to have the advertisement messages played between the media files.

The subscription fee may be, for example, a monthly subscription fee, a yearly subscription fee, or a subscription fee based upon a number of minutes of access to the wireless network **15.** The discount of the subscription fee may be, for example, a discount of the entire subscription fee, or a discount of part of the subscription fee. Alternatively, other subscription fee structures or discount structures may be employed.

The advertisement messages may be audio advertisement messages, video advertisement messages, visual advertisement messages, or any combination thereof. In the example illustrated in FIG. 1, the advertising server 17 is sending an audio advertisement message to the mobile wireless communications device **12a** between playback of first and second media files. The advertisement in this example is for the user to "EAT AT JOE'S!!" Other advertisements may include, for example, a phone number, an address, or any kind of information that the advertiser chooses to include.

In addition, the display **13** of the mobile wireless communications device **12a** is illustratively also displaying a visual advertising message to "EAT AT JOE'S" during playback of the advertisement. In some applications the visual message may include, for example, a phone number, an address, a website address, or any kind of visual that the advertiser chooses to include. The visual content may be "active" in that a user may interact with the visual content in order to initiate an action of some kind. The user may be able to interact with a phone number in order to place a phone call to that phone number, with an address in order to display a map corresponding to that address, or with a website address in order to view that website. Other types of user interaction with the visual contact are also possible.

Those of skill in the art will appreciate that the visual advertising message may cause the mobile wireless communications device **12a** to launch an application to view the targeted advertisement. For example, the visual advertisement message may include a video file and may cause the mobile wireless communications device **12a** to launch a video viewing application to view the video. As another example, the targeted advertisement may include a web page or a link thereto and may cause the mobile wireless communications device **12a** to launch a web browser to view the web page.

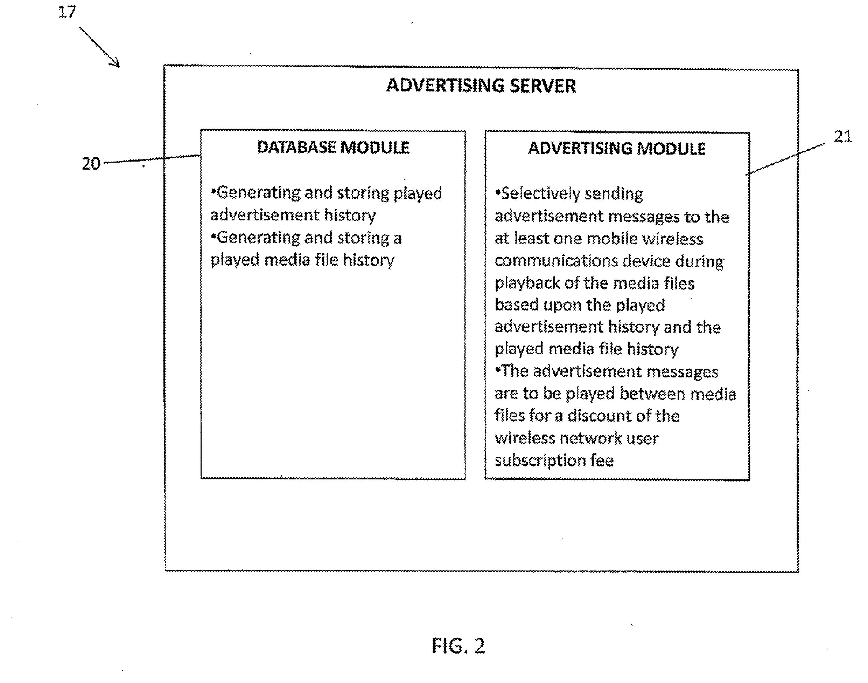

The advertising server **17** illustratively comprises a database module **20** and an advertising module **21** (FIG 2). The database module **20** generates and stores a played advertisement history. This feature may track of the number of advertisements that the user has listened to, the number of advertisements that the user has skipped (described in further detail below), and may also track the date and time each advertisement was played. The discount of the wireless network user subscription fee may be based upon the number of advertisements that the user has listened to.

The database module **20** also illustratively generates and stores a played media file history. A user's media preferences may allow the inference of valuable data about what sort of products and services that user may be inclined to purchase. For example, a user who routinely watches or listens to the New York Symphony Orchestra may be interested in purchasing tickets to see the New York Symphony Orchestra in concert.

Those of skill in the art will recognize that, in some applications, the mobile wireless communications device **12a** may generate the advertisement history and/or the played media file history and may transfer those histories to the database module **12**. In fact, the database module **20a** may be stored in a memory and executed by a processor (not shown) of the mobile wireless communications device **12a.** This would allow these histories to be accurately recorded even if the mobile wireless communications device **12a** is not in communication with the wireless network **15** during playback of the advertisements and/or the media files. Indeed, in some applications, both the advertising server **17** and the at least one mobile wireless communications device **12a** may include such a database module **20**.

The advertising module **21** selectively sends the advertisement messages to the mobile wireless communications device **12a** during playback of the media files. For example, the advertisement messages may not be previously stored in the memory of the mobile wireless communications device **12a** but may be streamed thereto in real time as they are played to the user. Alternatively, the advertisement messages may be sent to the mobile wireless communications device **12a** prior to playback of the advertisement messages and/or the media files (e.g. the advertisement messages may be sent to the mobile wireless communications device and may be stored in the memory thereof for playback at a later time, such as when the mobile wireless communications device 12a is not in communication with the wireless network **15**).

The advertising module **21** may selectively send the advertisement messages to the mobile wireless communications device **12a** based upon the played advertisement history. This feature may prevent the user from listening to the same advertisement multiple times in a row. Additionally, this may help ensure that the user listens to the same advertisement a desired number of times.

The advertising module **21** may, additionally or alternatively, selectively send the advertisement messages to the mobile wireless communications device **12a** based upon the played media file history. As explained above with reference to the New York Symphony Orchestra, this may allow selective sending of advertisements that a user may be more likely to be interested in.

As also explained above, these advertisement messages are to be played between the media files in exchange for a discount of the wireless network user subscription fee. It should be understood that one advertisement message may be played after each media file or that a plurality of advertisement messages may be played after each media file. In addition, the advertisement messages may merely be played between certain ones of the media files rather than between each of the media files. Furthermore, at least one advertisement message may be played before playback of a first media file or after playback of a least media file.

The media files may be transferred to the at least one mobile wireless communications device via the wireless network or by a wired connection to a computer, for example.

It should also be noted that the advertising module **21** may send the advertisement messages to the mobile wireless communications device **12a** via the wireless network **15**, or may send the advertisement messages to the mobile wireless communications device **12a** via a wired connection to a computer. This transfer of advertisement messages may take place at the same time as the transfer of the media files or may take place at another point in time.

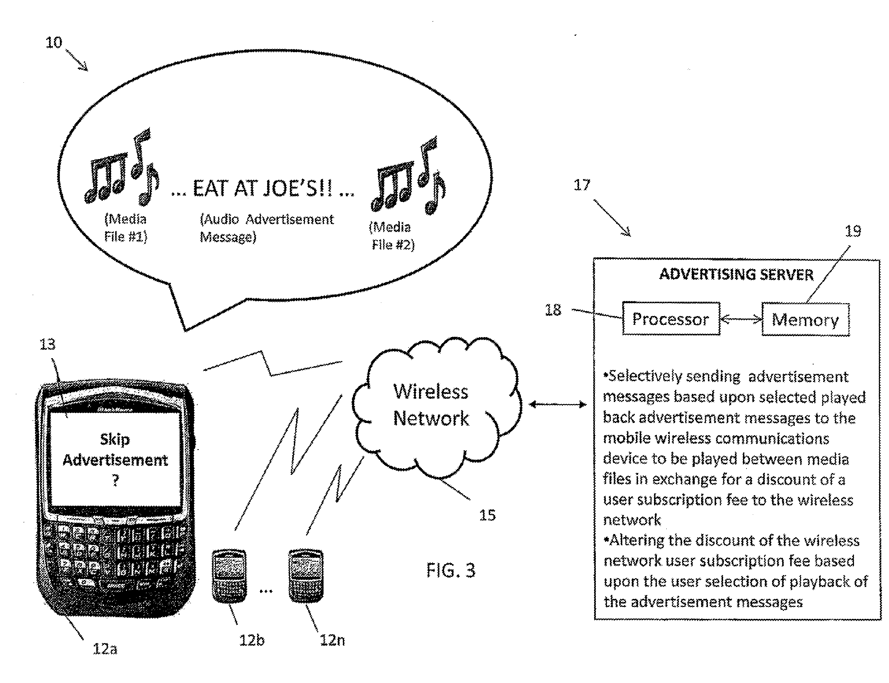

With reference to FIG. 3, an alternative embodiment of a communications system **10'** is now described. The communications system comprises a plurality of mobile wireless communications devices **12a'-12n'.** For readability only one mobile wireless communications device **12a'** will be referred to. The communications system **10'** also includes a wireless network **15'** and an advertising server **17'**.

The advertising server **17'** includes a processor **18'** and a memory **19'.** The server **17'** selectively sends advertisement messages to the mobile wireless communications device **12a'** in exchange for a discount of a user subscription fee to the wireless network.

The mobile wireless communications device **12a'** may allow a user to skip an advertisement if desired. In the illustrated example, the display **13'** of the mobile wireless communications device **12a'** is displaying a prompt to a user that reads "Skip Advertisement?" The mobile wireless communications device **12a'** may accept an input via a keypad **22'** or other input device and may skip playback of the advertisement based upon that input. This feature allows a user to skip playback of an advertisement that he or she is not interested in. Alternatively, the mobile wireless communications device **12a'** may not explicitly prompt the user to skip an advertisement, but the user may instead use a particular input (for example, the keypad **22'**) to skip an advertisement without being prompted.

The advertising server **17'** may store a selected played back advertisement message history. This history may indicate what advertisement messages that a user has listened to. Additionally or alternatively, this history may indicate what advertisement messages that the user has skipped. The advertising server **17'** may selectively send the advertisement messages to the mobile wireless communications device **12a'** based upon this played back advertisement message history. For example, if this history indicates that a large percentage of advertisement messages for pizza restaurants were skipped, the advertising server **17'** may instead send advertisement messages for hamburger restaurants.

It should be noted that the selected played back advertisement message history may, additionally or alternatively, be stored on the mobile wireless communications device **12a'**. Storage of the selected played back advertisement message history on both the mobile wireless communications device **12a'** and the advertising server **17'** may facilitate a more complete history. For example, sometimes an advertisement message may be played back when the mobile wireless communications device **12a'** is not connected to the wireless network **15'** (e.g. the user is on an airplane or in an area without wireless network coverage). If the mobile wireless communications device **12a'** stores a selected played back advertisement message history, a record of the advertisement messages played during this time will not be lost. Once the mobile wireless communications device **12a'** reconnects to the wireless network **15'**, it may send its selected played back advertisement message history to the advertising server **17'**. Alternatively, the mobile wireless communications device **12a'** may send its selected played back advertisement message history to the advertising server **17'** via a wired connection to a computer.

Since the above described features may allow for a user to skip playback of the advertisement messages, it should be understood that the advertising server **17'** may alter the discount of the wireless network user subscription fee based upon the user section of playback of the advertisement messages or based upon the played back advertisement message history. For example, the discount may be decreased if a certain percentage of advertisement messages are skipped. Similarly, the discount may be increased if a certain percentage of the advertisement messages are not skipped.

The discount may also be altered based upon the total number of played advertisements and the total number of skipped advertisements (e.g, the number of skipped advertisements may be subtracted from the number of played advertisements). Advertisements that are not played in their entirety (e.g. that was skipped during playback) may, in some applications, not be counted as played advertisements. In addition, the discount may also be altered based upon the total length of time of the played advertisements and the total length of time of the skipped advertisements.

The advertising servers **17, 17'** may each comprise a computer having a processor, a memory, and a hard drive. The advertising servers **17**, **17'** may each further comprise one or more computer executable modules stored on the respective hard drives. The one or more computer executable modules may each be executed by the processor. These computer executable modules may also be stored on other computer readable mediums, such as compact discs (CDs) and digital versatile discs (DVDs).

Similarly, the various modules shown as residing on the advertising server **17** may each be implemented as computer executable modules stored in the hard drive of a computer and executed by the processor thereof. The various modules shown as residing on the advertising server **17** may also be stored on other computer readable mediums.

Alternatively, the various modules could be spread across different servers or machines, as will be appreciated by those skilled in the art. It is to be understood that if the advertising servers **17**, **17'** or modules thereof are implemented as computer executable modules, such computer executable modules define structural and functional interrelationships with the executing computer that permit the functionality the computer executable modules to be realized.

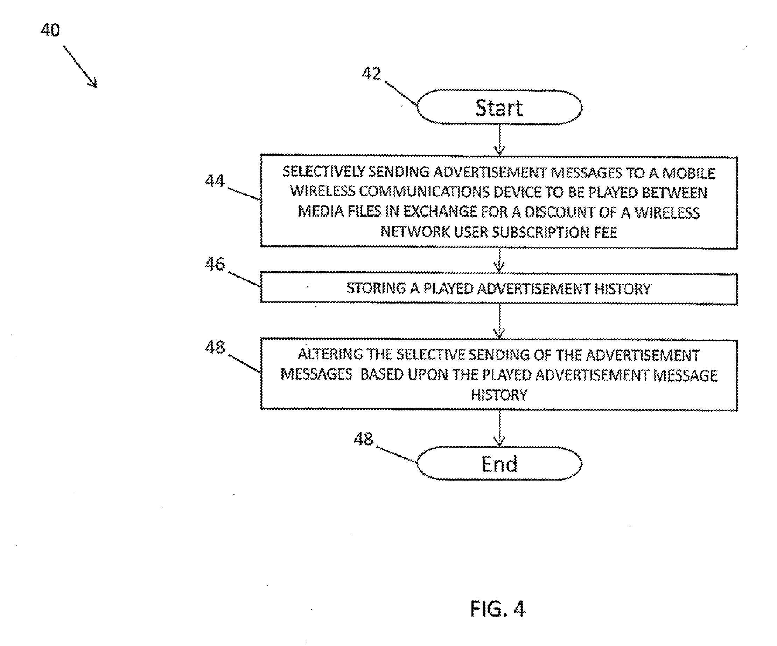

With additional reference to the flow chart 40 of FIG. 4, a method of using an advertising server to send advertisement messages to at least one mobile wireless communications device operable based upon payment of a wireless network user subscription fee and for sequentially playing media files is now described. After the start (Block **42**), at Block **44**, advertisement messages are selectively sent to the mobile wireless communications device to be played between audio in exchange for a discount of the wireless network user subscription fee.

At Block **46**, a played advertisement history is stored. At Block **48**, the selective sending of the advertisement messages is altered based upon the played advertisement history. Block **50** indicates the end of the method,

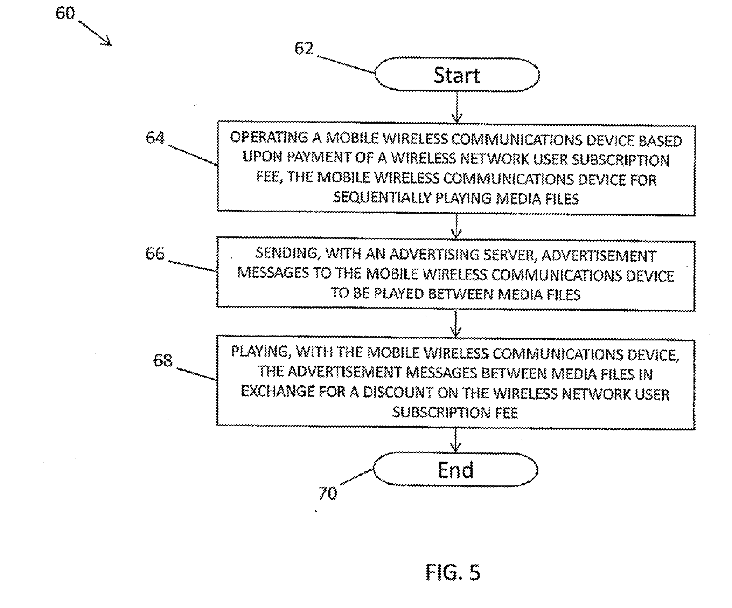

Now referring to flow chart **60** of Fig. 5, a method of operating a communications system is now described. After the start (Block **62**) at Block **64**, a mobile wireless communications device is operated based upon payment of a wireless network user subscription fee, the mobile wireless communications device for sequentially playing media files. At Block **66,** advertisement messages are sent, with an advertising server, to the mobile wireless communications device to be played between media files.

At Block **68,** the advertisement messages are played, with the mobile wireless communications device, between media files in exchange for a discount on the wireless network user subscription fee. Block **70** indicates the end of the method.

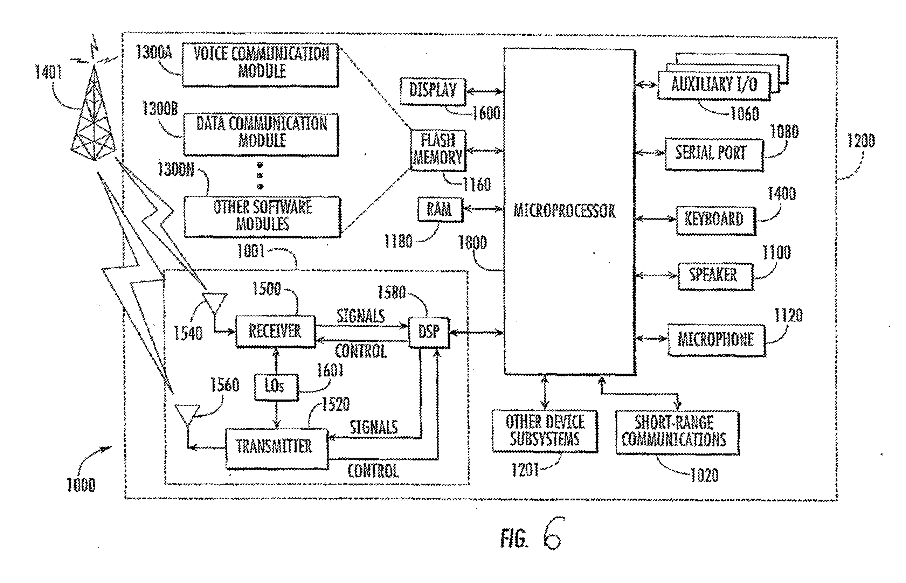

Exemplary components of a hand-held mobile wireless communications device **1000** that may be used in accordance with the communications system **10** are further described in the example below with reference to FIG. 6. The device **1000** illustratively includes a housing **1200**, a keypad **1400** and an output device **1600,** The output device shown is a display **1600**, which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800**, other parts of the mobile device **1000** are shown schematically in FIG. 6. These include a communications subsystem **1001;** a short-range communications subsystem **1020**; the keypad **1400** and the display **1600**, along with other input/output devices **1060**, **1080**, **1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. The flash memory **1160** may cooperate with the processing device **1800** to store the media files and/or the advertisements. It should be understood that the media files and/or the advertisements may be stored in other types of memory devices, such as the random access memory (RAM) **1180**, ROM memory or other similar storage elements. In addition, system software, specific device applications, or parts thereof, may be temporarily loaded into a volatile store, such as the RAM **1180**. Communications signals received by the mobile device may also be stored in the RAM **1180**.

The processing devices **1800**, in addition to its operating system functions, enables execution of software applications **1300A-130CN** on the device **1000.** A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system,

Communication functions, including data and voice communications, are performed through the communications subsystem **1001,** and possibly through the short-range communications subsystem. The communications subsystem **1001** includes a receiver **1500**, a transmitter **1520,** and one or more antennas **1540** and **1560**. In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc, Other types of data and voice networks, both separate and integrated, may also be utilized with the mobile device **1000**. The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS network, however, network access is associated with a subscriber or user of a device, A GPRS device therefore utilizes a subscriber identity module, commonly referred to as a SIN. card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. Modulated and encoded) by the DSP **1580** and are then provide to the transmitter **1520** for digital to analog conversion, frequency up conversion, filtering, amplification and transmission to the communication network **1401** (or networks) via the antenna **1560**.

in addition to processing communications signals, the DSP **1580** provides for control of the receiver 1500 and the transmitter **1520,** For example, gains applied to communications signals in the receiver **1500** and transmitter 1520 may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000**. In addition, the display **1600** may also be utilised in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A communications system (10) comprising:
at least one mobile wireless communications device (12a-12n) operable based upon payment of a wireless network (15) user subscription fee, and for sequentially playing media files; and
an advertising server (17) for sending at least one advertisement message to the at least one mobile wireless communications device to be played between media files;
said at least one mobile wireless device for playing the at least one advertisement message between media files for a discount of the wireless network user subscription fee.

2. The communications system (10) of Claim 1 wherein said advertising server (17) selectively sends the at least one advertisement message,

3. The communications system (10) of Claim 2 wherein said advertising server (17) further cooperates with said at least one mobile wireless communications device (12a-12n) to generate a played advertisement message history; and wherein said advertising server selectively sends the at least one advertisement message based upon the played advertisement message history.

4. The communications system (10) or Claim 2 wherein said advertising server (17) further cooperates with said at least one mobile wireless communications device (12a-12n) to generate a played media file history; and wherein said advertising server selectively sends the at least one advertisement message based upon the played media file history.

5. The communications system (10) of Claim 1 wherein said at least one mobile wireless communications device (12a-12n) permits user selection of playback of the at least one advertisement message thereby affecting the discount of the wireless network user subscription fee.

6. The communications system (10) of Claim 1 wherein said at least one mobile wireless communications device (12a-12n) permits user selection of playback of the at least one advertisement message; and wherein said advertising server (17) selectively sends the at least one advertisement message to said at least one wireless communications device based upon the selected played back advertisement message.

7. The communications system of Claim 1 (10) wherein the at least one mobile wireless communications device (12a-12n) comprises a processor (18) and a memory (19) cooperating therewith to store the media files,

8. The communications system of Claim 7 (10) wherein said processor (18) and memory (19) further cooperate to store the at least one advertisement message.

9. The communications system (10) of Claim 7 wherein said advertising server (17) sends the at least one advertisement message as a stream; and wherein said at least one mobile wireless communications device (12a-12n) further comprises a transceiver cooperating with said processor (16) and said memory (19) to play the at least one advertisement message stream.

10. The communications system of Claim 1 (10) wherein said at least one mobile wireless communications device (12a-12n) comprises a display (13); and wherein said advertising server (17) further cooperates with said at least one mobile wireless device for sending visual advertisement messages to the at least one mobile wireless communications device to be displayed on said display.

11. A method of using an advertising server (17) to send audio advertisement messages to at least one mobile wireless communications device (12a-12n) operable based upon payment of a wireless network (15) user subscription fee and for sequentially playing media files, the method comprising;
selectively sending at least one advertisement message to the at least one mobile wireless communications device to be played between media files for a discount of the wireless network user subscription fee; and
storing a played advertisement history;
the selective sending of the at lease one advertisement message being based upon the played audio advertisement message history.

12. The method Claim 11 further comprising storing a played media file history; and wherein the selective sending of the at least one advertisement message is also based upon the played media file history.

13. The method of Claim 11 wherein the at lease one advertisement message is selectively sent to the at least one mobile wireless communications device (12a-12n) during playback of the media files.

14. The method of Claim 11 wherein the at lease one advertisement message comprises at least one of an audio advertisement message and a visual advertisement message.
